# EUROPEAN PATENT APPLICATION

(11) **EP 4 190 679 A1**
(43) Date of publication of application: **07.06.2023**
(21) Application number: 21848581.1
(22) Date of filing: 28.07.2021
(51) Int. Cl.: B62L 3/08, B60T 13/68, B60T 8/00, B60T 8/1761, B60T 8/26

(54) **BRAKE DEVICE FOR VEHICLE**

(30) Priority: 31.07.2020 JP 2020130822
(71) Applicant: Hitachi Astemo, Ltd., Ibaraki 312-8503 (JP)
(72) Inventor: TSUDA Fumiya, Hitachinaka-shi, Ibaraki 312-8503 (JP); TSUCHIYA Tomoharu, Hitachinaka-shi, Ibaraki 312-8503 (JP); TERAO Fuminori, Hitachinaka-shi, Ibaraki 312-8503 (JP); MURAYAMA Tetsuji, Hitachinaka-shi, Ibaraki 312-8503 (JP); OBINATA Naoto, Hitachinaka-shi, Ibaraki 312-8503 (JP); ATSUTA Daiki, Hitachinaka-shi, Ibaraki 312-8503 (JP); SHIMMURA Tetsu, Hitachinaka-shi, Ibaraki 312-8503 (JP)
(74) Representative: Dehns
(86) International application number: PCT/JP2021/027836
(87) International publication number: WO 2022/025095

(57) **Abstract**

This brake device (U) comprises: an operation amount detector (31); a wheel speed detector (32); a controller (50) for controlling a wheel brake (F); and an electronic controller (200). The electronic controller (200) sets a target deceleration on the basis of an operation amount of a brake lever (L2), and sets an estimated deceleration on the basis of a wheel speed. Further, the electronic controller (200) controls the controller (50) on the basis of the target deceleration and the estimated deceleration. The brake device (U) improves operation feel for a driver, while being capable of reducing the number of components and simplifying control.

## Description

### Technical Field

The present invention relates to a brake device for a vehicle.

### Background Art

As a brake device mainly used in a bar handle type vehicle such as a motorcycle, a motor tricycle, and an all-terrain vehicle (ATV), there is a brake device that controls a braking force of a wheel brake based on a brake hydraulic pressure of a hydraulic brake system (for example, see Patent Literature 1).

### Citation list

### Patent Literature

Patent Literature 1: WO 2018/078475

### Summary of Invention

### Technical Problem

The brake device for a vehicle in the related art described above has a problem that, even when an operation amount that a driver applies to a brake lever is the same, braking of the vehicle differs between a case in which a weight of a loaded object loaded on the vehicle is large and a case in which a weight of a loaded object loaded on the vehicle is small.

The brake device for a vehicle in the related art further has a problem that the number of components in a modulator is large and control is complicated since a braking force of a wheel brake is controlled based on brake hydraulic pressures detected by a plurality of hydraulic pressure sensors.

An object of the invention is to provide a brake device for a vehicle, which can solve the problems described above, improve operation feel for the driver, reduce the number of the components in the modulator, and simplify the control.

### Solution to Problem

In order to solve the above problems, the invention provides a brake device for a vehicle including: an operation amount detector configured to detect an operation amount to an operator; a wheel speed detector configured to detect a wheel speed; a controller configured to control a braking force of a wheel brake; and an electronic controller. The electronic controller includes: a target deceleration setting unit configured to set a target deceleration, which is a target value of a deceleration of the vehicle, based on the operation amount to the operator; and an estimated deceleration setting unit configured to set an estimated deceleration, which is an estimated value of the deceleration of the vehicle, based on the wheel speed detected by the wheel speed detector. Further, the electronic controller includes a braking control unit configured to control the controller based on the target deceleration and the estimated deceleration.

In the brake device for a vehicle according to the invention, since the braking force of the wheel brake is controlled by referring to the wheel speed in addition to the operation amount to the operator, even when a weight of a loaded object loaded on the vehicle varies, the vehicle can be braked in the same manner as long as the operation amount is the same. Accordingly, in the brake device for a vehicle according to the invention, since the vehicle is braked according to the operation amount to the operator while being less likely to be affected by the weight of the loaded object, operation feel for a driver can be improved.

The brake device for a vehicle according to the invention controls the braking force of the wheel brake based on the operation amount to the operator and the wheel speed, and thus can also be applied to a brake system other than a hydraulic brake system.

In the brake device for a vehicle according to the invention, a braking force of a wheel can be controlled even without using a hydraulic pressure sensor for braking control. Further, since the number of components in a modulator is reduced if the hydraulic pressure sensor is omitted, a manufacturing cost can be reduced, and a size and a weight can be reduced.

In the brake device for a vehicle according to the invention, since the target deceleration is set based on the wheel speed, the control can be simplified and versatility can be enhanced.

It is preferable that in the brake device for a vehicle, deceleration data indicating correspondence relationship between the operation amount to the operator and the deceleration of the vehicle is stored in the electronic controller, and the target deceleration setting unit accurately sets the target deceleration based on the deceleration data.

It is preferable that in the brake device for a vehicle, the braking control unit executes braking control matching the target deceleration by executing braking control for controlling a brake hydraulic pressure acting on the wheel brake based on a difference between the target deceleration and the estimated deceleration.

In the brake device for a vehicle, the electronic controller includes: an anti-locking braking control unit configured to execute anti-locking braking control for preventing locking of a wheel by increasing, decreasing, or holding a brake hydraulic pressure of the wheel brake by the controller; and an anti-locking braking control determination unit configured to determine whether the anti-locking braking control is necessary. When the anti-locking braking control determination unit determines that the anti-locking braking control is necessary, the anti-locking braking control unit executes the anti-locking braking control. When the anti-locking braking control determination unit determines that the anti-locking braking control is unnecessary, the braking control unit controls the braking force of the wheel brake.

In the configuration, since the anti-locking braking control can be executed, and the braking force of the wheel brake is controlled based on the operation amount to the operator and the wheel speed, the operation feel for the driver can be improved.

In the brake device for a vehicle, the electronic controller includes a slip amount detection unit configured to detect a slip amount of the wheel. In the anti-locking braking control determination unit, when the slip amount is larger than a slip threshold or when the estimated deceleration is larger than a lift threshold, the anti-locking braking control is executed.

In the configuration, the anti-locking braking control can be executed while preventing slip of the wheel and lift of a vehicle body.

The brake device for a vehicle may include: two operators which are respectively on a front wheel side and a rear wheel side; two wheel brakes which are respectively on the front wheel side and the rear wheel side; a first brake system in which one of the operators and one of the wheel brakes are connected; and a second brake system in which the other of the operators and the other of the wheel brakes are connected. In this case, the target deceleration setting unit sets the target deceleration based on an operation amount to the other operator, and the braking control unit controls the controller provided in the first brake system based on the target deceleration and the estimated deceleration.

In the configuration, braking control of the first brake system can be executed by operating the one operator, and further, the braking control of the first brake system can be executed when the other operator is operated.

In the brake device for a vehicle, the first brake system may include: a hydraulic pressure line in which a brake hydraulic pressure is generated by the one operator or a pump; and control valve means provided in the hydraulic pressure line. In this case, the control unit can control a braking force of the one wheel brake by switching opening and closing of the control valve means in conjunction with a braking force of the other wheel brake.

In the brake device for a vehicle, the braking control unit can generate a braking force in the one wheel brake by operating the pump based on an operation amount to the other operator.

In the configuration, the braking force can be generated in the wheel brake of the first brake system in conjunction with the wheel brake of a hydraulic, mechanical, or electric second brake system.

It is preferable that in the brake device for a vehicle, the braking control unit executes interlocking braking control matching the target deceleration by increasing, decreasing, or holding the brake hydraulic pressure of the one wheel brake by switching the opening and closing of the control valve means.

In the brake device for a vehicle, the control valve means includes: a pressure regulator valve; an inlet valve leading to the pressure regulator valve and to the one wheel brake; and an outlet valve leading to the one wheel brake and to a suction side of the pump. The brake hydraulic pressure acting on the one wheel brake from the one operator is capable of being adjusted by adjusting a valve opening pressure of the pressure regulator valve. When the estimated deceleration is equal to or smaller than the target deceleration, the braking control unit adjusts the valve opening pressure of the pressure regulator valve, opens the inlet valve, closes the outlet valve, and operates the pump. At this time, it is preferable to increase the braking force of the wheel brake, by changing a discharge amount of the pump based on the difference between the target deceleration and the estimated deceleration to increase the brake hydraulic pressure.

In the brake device for a vehicle, when the estimated deceleration is larger than the target deceleration and the difference between the target deceleration and the estimated deceleration is equal to or smaller than a compression/decompression threshold, the braking control unit adjusts the valve opening pressure of the pressure regulator valve to a first hydraulic pressure, opens the inlet valve, closes the outlet valve, operates the pump, and adjusts the discharge amount of the pump to a first set value.

In the configuration, the brake hydraulic pressure is increased by adjusting the discharge amount of the pump to a set value, and thus the braking force of the wheel brake can be held or increased according to a use condition or a specification of the vehicle.

In the brake device for a vehicle, when the estimated deceleration is larger than the target deceleration and the difference between the target deceleration and the estimated deceleration is larger than the compression/decompression threshold, the braking control unit adjusts the valve opening pressure of the pressure regulator valve to a second hydraulic pressure smaller than the first hydraulic pressure, opens the inlet valve, and closes the outlet valve, operates the pump, and adjusts the discharge amount of the pump to a second set value smaller than the first set value.

In the configuration, the brake hydraulic pressure is reduced by reducing the discharge amount of the pump, and thus the braking force of the wheel brake can be reduced according to the use condition and the specification of the vehicle.

### Advantageous Effects of Invention

In the brake device for a vehicle according to the invention, since braking control corresponding to the difference between the target deceleration and the estimated deceleration can be executed, the braking control is less likely to be affected by a weight of a loaded object, and operation feel for a driver can be improved. The brake device for a vehicle according to the invention can be applied to various brake systems, and can simplify control. The brake device for a vehicle according to the invention can reduce the number of components.

### Brief Description of Drawings

[FIG. 1] FIG. 1 is a configuration diagram of a brake device according to an embodiment of the invention.
[FIG. 2] FIG. 2 is a configuration diagram of an electronic controller according to the embodiment of the invention.
[FIG. 3] FIG. 3 is a diagram showing deceleration data according to the embodiment of the invention.
[FIG. 4] FIG. 4 is a configuration diagram of the brake device during interlocking braking control according to the embodiment of the invention.
[FIG. 5] FIG. 5 is a flowchart showing braking control in the brake device according to the embodiment of the present invention.
[FIG. 6] FIG. 6 is a flowchart showing the braking control in the brake device according to the embodiment of the present invention.

### Description of Embodiments

An embodiment of the invention will be described in detail with reference to the drawings as appropriate.

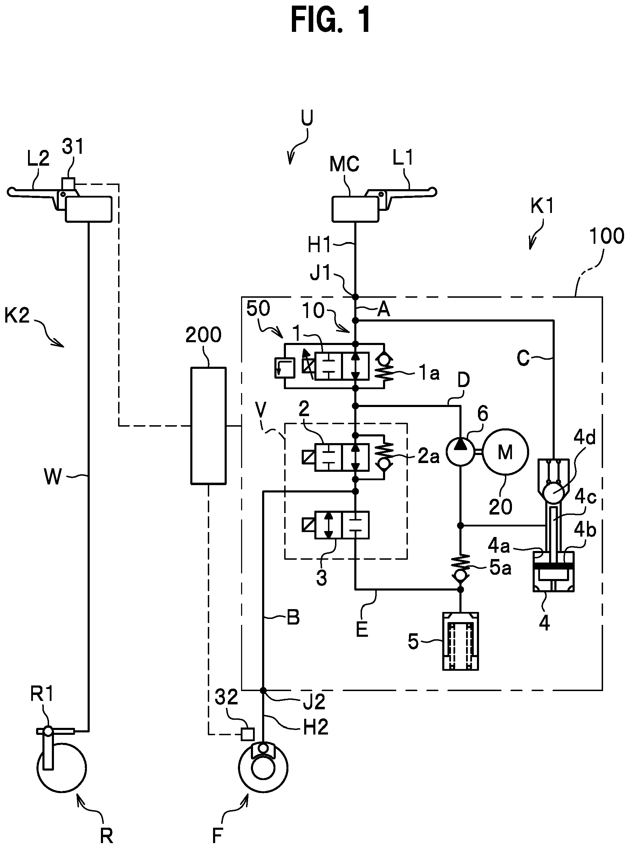

As shown in FIG. 1, a brake device U for a vehicle (hereinafter, simply referred to as a "brake device") according to the present embodiment is used in a bar handle type vehicle such as a motorcycle, a motor tricycle, and an all-terrain vehicle (ATV).

The brake device U includes two brake levers L1 and L2 on a front wheel side and a rear wheel side, two wheel brakes F and R on the front wheel side and the rear wheel side, a first brake system K1, a second brake system K2, a metal base 100, and a motor 20. Further, the brake device U includes an operation amount detector 31 that detects an operation amount to the brake lever L2, a wheel speed detector 32 that detects a wheel speed, a controller 50, and an electronic controller 200. The wheel speed detector 32 is a wheel speed sensor that detects a wheel speed of a front wheel.

The brake device U can execute anti-locking braking control for the wheel brake F on the front wheel side. Further, the brake device U can execute interlocking braking control for generating a braking force in the wheel brake F on the front wheel side in conjunction with the wheel brake R on the rear wheel side.

The first brake system K1 is a hydraulic circuit for applying a brake hydraulic pressure to the wheel brake F on the front wheel side. The wheel brake F on the front wheel side is a hydraulic disc brake that generates a braking force on a wheel by sandwiching a disk between pads by a brake hydraulic pressure acting on a wheel cylinder.

The first brake system K1 is provided between a master cylinder MC and the wheel brake F. The first brake system K1 is a system extending from an inlet port J1 to an outlet port J2 of the base 100. A pipe H1 extending to the master cylinder MC is connected to the inlet port J1, and a pipe H2 extending to the wheel brake F is connected to the outlet port J2.

The brake lever L1, which is an operator, is connected to the master cylinder MC. The master cylinder MC generates a brake hydraulic pressure corresponding to a force applied to the brake lever L1 by a driver. The master cylinder MC is connected to the wheel brake F via the first brake system K1.

The first brake system K1 includes a hydraulic pressure line 10 extending from the master cylinder MC to the wheel brake F, and the controller 50. The controller 50 is a modulator that controls the braking force of the wheel brake F. The controller 50 includes a pressure regulator valve 1, control valve means V, a suction valve 4, a reservoir 5, and a pump 6, and these components are assembled to the base 100.

In the following description, in the hydraulic pressure line 10, a hydraulic pressure line extending from the inlet port J1 to the pressure regulator valve 1 is referred to as an "output hydraulic pressure line A", and a hydraulic pressure line extending from the pressure regulator valve 1 to the wheel brake F is referred to as a "wheel hydraulic pressure line B". In the hydraulic pressure line 10, a hydraulic pressure line branching from the output hydraulic pressure line A and extending to the pump 6 is referred to as a "suction line C", and a hydraulic pressure line extending from the pump 6 to the wheel hydraulic pressure line B is referred to as a "discharge line D". Further, in the hydraulic pressure line 10, a hydraulic pressure line extending from the wheel hydraulic pressure line B to the suction line C is referred to as a "release line E". An "upstream side" means a master cylinder MC side, and a "downstream side" means a wheel brake F side.

The pressure regulator valve 1 is a normally open proportional solenoid valve (linear solenoid valve) interposed between the output hydraulic pressure line A and the wheel hydraulic pressure line B. An electromagnetic coil of the pressure regulator valve 1, which drives a valve body of the pressure regulator valve 1, is electrically connected to the electronic controller 200.

Based on a command from the electronic controller 200, the pressure regulator valve 1 is brought into a closed state when the electromagnetic coil is excited, and is brought into an open state when the electromagnetic coil is demagnetized.

The pressure regulator valve 1 is brought into the open state when a differential pressure between the brake hydraulic pressure on a wheel hydraulic pressure line B side (wheel brake F side) and the brake hydraulic pressure on an output hydraulic pressure line A side (master cylinder MC side) in the closed state is larger than or equal to a valve opening pressure. Accordingly, a brake fluid flows from the wheel hydraulic pressure line B side to the output hydraulic pressure line A side through the pressure regulator valve 1.

In the pressure regulator valve 1, the valve opening pressure can be adjusted by adjusting a value of a current flowing through the electromagnetic coil based on the command from the electronic controller 200.

The brake hydraulic pressure in the wheel hydraulic pressure line B is adjusted to a predetermined pressure when the brake fluid flows from the wheel hydraulic pressure line B to the output hydraulic pressure line A through the pressure regulator valve 1. That is, the brake hydraulic pressure acting on the wheel brake F can be adjusted by adjusting the valve opening pressure of the pressure regulator valve 1.

The pressure regulator valve 1 includes a check valve 1a. The check valve 1a is connected in parallel to the pressure regulator valve 1. The check valve 1a is a one-way valve that allows the brake fluid to flow from the output hydraulic pressure line A to the wheel hydraulic pressure line B.

The control valve means V has a function of switching among a state in which the wheel hydraulic pressure line B is opened while the release line E is blocked, a state in which the wheel hydraulic pressure line B is blocked while the release line E is opened, and a state in which the wheel hydraulic pressure line B and the release line E are blocked. The control valve means V includes an inlet valve 2, a check valve 2a, and an outlet valve 3.

The inlet valve 2 is a normally open solenoid valve provided in the wheel hydraulic pressure line B, and leads to the pressure regulator valve 1 and the wheel brake F. The inlet valve 2 allows the brake fluid to flow from the upstream side to the downstream side in an open state, and blocks the flow of the brake fluid between the upstream side and the downstream side in a closed state.

An electromagnetic coil of the inlet valve 2, which drives a valve body of the inlet valve 2, is electrically connected to the electronic controller 200, and based on a command from the electronic controller 200, the inlet valve 2 is brought into the closed state when the electromagnetic coil is excited, and is brought into the open state when the electromagnetic coil is demagnetized.

The check valve 2a is a one-way valve that allows only flow of the brake fluid from the downstream side to the upstream side, and is connected in parallel to the inlet valve 2.

The outlet valve 3 is a normally closed solenoid valve provided in the release line E, and leads to the wheel brake F and a suction side of a pump P to be described later. The outlet valve 3 blocks flow of the brake fluid between the wheel brake F side and a reservoir 5 side in a closed state, and allows the brake fluid to flow from the wheel brake F side to the reservoir 5 side in an open state.

An electromagnetic coil of the outlet valve 3, which drives a valve body of the outlet valve 3, is electrically connected to the electronic controller 200, and based on a command from the electronic controller 200, the outlet valve 3 is brought into the open state when the electromagnetic coil is excited, and is brought into the closed state when the electromagnetic coil is demagnetized.

The reservoir 5 is provided in the release line E, and has a function of temporarily storing the brake fluid released by opening the outlet valve 3. A check valve 5a, which allows only flow of the brake fluid from the reservoir 5 side to a pump 6 side, is interposed between the reservoir 5 and the pump 6.

The pump 6 is interposed between the suction line C and the discharge line D. The pump 6 is driven by a rotational force of the motor 20, sucks the brake fluid stored in the reservoir 5 of the suction line C, and discharges the brake fluid to the discharge line D.

The motor 20 is a power source of the pump 6 provided in the first brake system K1, and is an electric component that operates based on a command from the electronic controller 200.

The suction valve 4 switches between a state in which the suction line C is opened and a state in which the suction line C is blocked. The suction valve 4 is normally closed, and is opened by a difference between the brake hydraulic pressure on the output hydraulic pressure line A side (master cylinder MC side) and a brake hydraulic pressure on a suction port side of the pump 6.

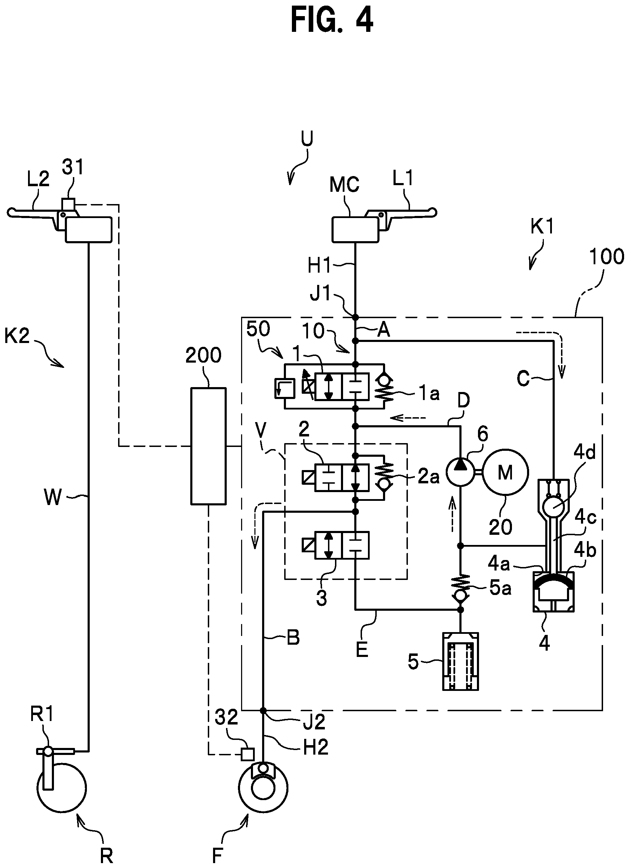

When the pump 6 operates and a pressure of the suction line C on the suction port side of the pump 6 becomes a vacuum pressure, as shown in FIG. 4, a pressure of a vacuum pressure chamber 4a communicating with the suction line C on the suction port side of the pump 6 becomes a vacuum pressure. A diaphragm 4b of the suction valve 4 is elastically deformed toward a valve body 4d side by this vacuum pressure, and a plunger 4c pushes up a valve body 4d. Accordingly, the valve body 4d is separated from a valve seat, and the suction valve 4 is brought into an open state.

The second brake system K2 directly operates the wheel brake R on the rear wheel side by an operation to the brake lever L2, which is a brake operator, to generate a braking force.

One end of a brake wire W is connected to the brake lever L2. The other end of the brake wire W is connected to a rod R1 of the wheel brake R on the rear wheel side.

The wheel brake R on the rear wheel side is a mechanical drum brake that generates a braking force on the wheel when the brake wire W is pulled by the operation on the brake lever L2 to tilt the rod R1 and press a brake shoe against an inner peripheral surface of a drum.

The second brake system K2 is provided with the operation amount detector 31 that detects the operation amount to the brake lever L2 on the rear wheel side.

The operation amount detector 31 is an angle sensor that detects a tilt angle of the brake lever L2 when the driver operates the brake lever L2. The tilt angle of the brake lever L2 measured by the operation amount detector 31 is taken into the electronic controller 200 as needed.

The electronic controller 200 is a microcomputer including a central processing unit (CPU), a read only memory (ROM), a random access memory (RAM), and the like. The electronic controller 200 according to the present embodiment executes the anti-locking braking control and the interlocking braking control.

The electronic controller 200 controls opening and closing of the pressure regulator valve 1, the inlet valve 2, and the outlet valve 3 and controls an operation of the motor 20 based on various information from the operation amount detector 31, the wheel speed detector 32, and the like.

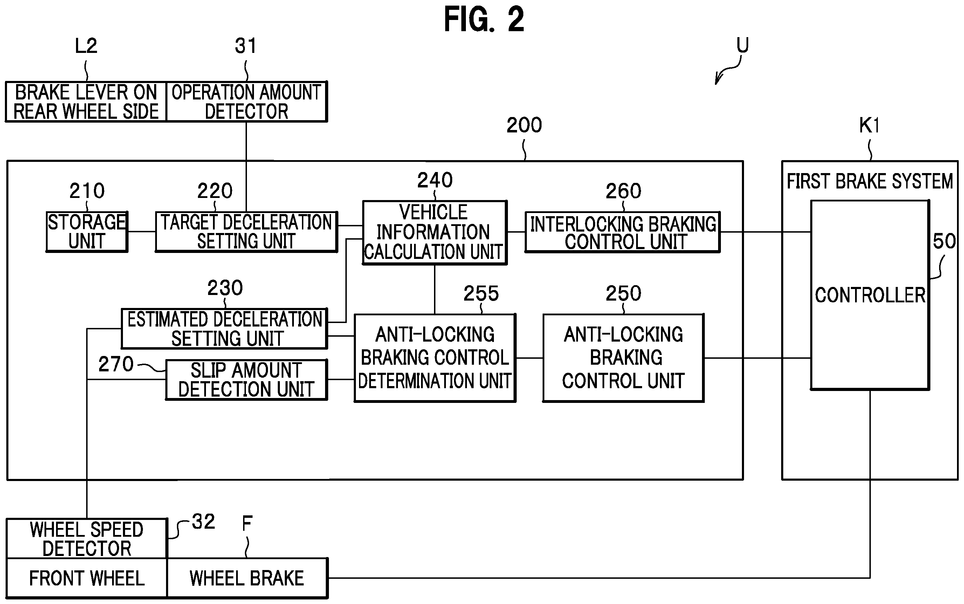

As shown in FIG. 2, the electronic controller 200 includes a storage unit 210, a target deceleration setting unit 220, an estimated deceleration setting unit 230, a slip amount detection unit 270, a vehicle information calculation unit 240, an anti-locking braking control determination unit 255, an anti-locking braking control unit 250, and an interlocking braking control unit 260.

The slip amount detection unit 270 detects a slip amount of the front wheel based on the wheel speed or the like detected by the wheel speed detector 32.

Deceleration data indicating correspondence relationship between the operation amount to the brake lever L2 on the rear wheel side and a deceleration of a vehicle is stored in the storage unit 210. The deceleration data is obtained by actually measuring the deceleration of the vehicle when the brake lever L2 on the rear wheel side is operated in a state in which one person is in the vehicle and no loaded object is on the vehicle.

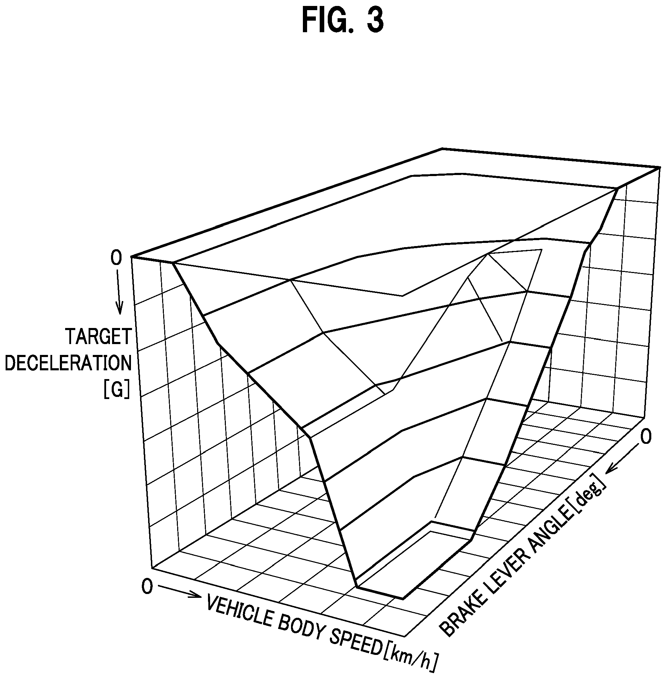

As shown in FIG. 3, the deceleration data according to the present embodiment is three-dimensional map data indicating the operation amount, the deceleration, and a target deceleration on three orthogonal axes, respectively. A brake lever angle in FIG. 3 indicates the operation amount to the brake lever L2.

In the present embodiment, an increase amount of the target deceleration with respect to an increase amount of a vehicle body speed is set to be larger in a high speed region of the vehicle body speed than in a low speed region of the vehicle body speed.

The storage unit 210 shown in FIG. 2 stores a slip threshold that is a threshold of a slip amount when it is determined whether the anti-locking braking control is necessary based on the slip amount.

Further, the storage unit 210 stores a lift threshold that is a threshold of an estimated deceleration when it is determined whether the anti-locking braking control is necessary based on the estimated deceleration. A case in which the estimated deceleration is larger than the lift threshold indicates that a load on the front wheel side of a vehicle body increases and a lift state in which the rear wheel side of the vehicle body tends to rise is large.

The target deceleration setting unit 220 sets the target deceleration, which is a target value of the deceleration of the vehicle, based on the deceleration data from the operation amount to the brake lever L2 detected by the operation amount detector 31. The target deceleration is a deceleration obtained when the driver operates the brake lever L2.

The estimated deceleration setting unit 230 sets the estimated deceleration, which is an estimated value of an actual deceleration of the vehicle, based on the wheel speed detected by the wheel speed detector 32.

The anti-locking braking control determination unit 255 determines whether the anti-locking braking control is necessary. The anti-locking braking control determination unit 255 causes the anti-locking braking control unit 250 to execute the anti-locking braking control when the slip amount is larger than the slip threshold or when the estimated deceleration is larger than the lift threshold.

The anti-locking braking control determination unit 255 determines that the anti-locking braking control is unnecessary when the slip amount of the wheel is equal to or smaller than the slip threshold and when the estimated deceleration is equal to or smaller than the lift threshold. In this case, the anti-locking braking control determination unit 255 causes the interlocking braking control unit 260 to control the braking force of the wheel brake F on a front side.

The vehicle information calculation unit 240 compares a magnitude of the target deceleration with a magnitude of the estimated deceleration.

When the estimated deceleration is equal to or smaller than the target deceleration, the interlocking braking control unit 260 adjusts the valve opening pressure of the pressure regulator valve 1 shown in FIG. 1, opens the inlet valve 2, closes the outlet valve 3, and operates the pump 6. Accordingly, the brake hydraulic pressure acting on the wheel brake F is increased. At this time, in order to make the estimated deceleration approach the target deceleration, based on a difference between the target deceleration and the estimated deceleration, the interlocking braking control unit 260 adjusts the valve opening pressure of the pressure regulator valve 1, drives the motor 20 with a variable value to change a discharge amount of the pump P.

When the estimated deceleration is larger than the target deceleration and the difference between the target deceleration and the estimated deceleration is equal to or smaller than a deceleration threshold, the interlocking braking control unit 260 (see FIG. 2) adjusts the valve opening pressure of the pressure regulator valve 1 to a first hydraulic pressure, opens the inlet valve 2, closes the outlet valve 3, and operates the pump 6. At this time, the interlocking braking control unit 260 (see FIG. 2) maintains the brake hydraulic pressure acting on the wheel brake F by adjusting a discharge amount of the pump 6 to a first set value.

When the estimated deceleration is larger than the target deceleration and the difference between the target deceleration and the estimated deceleration is larger than a previous speed threshold, the interlocking braking control unit 260 (see FIG. 2) adjusts the valve opening pressure of the pressure regulator valve 1 to a second hydraulic pressure smaller than the first hydraulic pressure, opens the inlet valve 2, closes the outlet valve 3, and operates the pump 6. At this time, the interlocking braking control unit 260 (see FIG. 2) reduces the brake hydraulic pressure acting on the wheel brake F by adjusting the discharge amount of the pump 6 to a second set value smaller than the first set value.

The deceleration threshold, the first hydraulic pressure, the second hydraulic pressure, the first set value, and the second set value are stored in the storage unit 210.

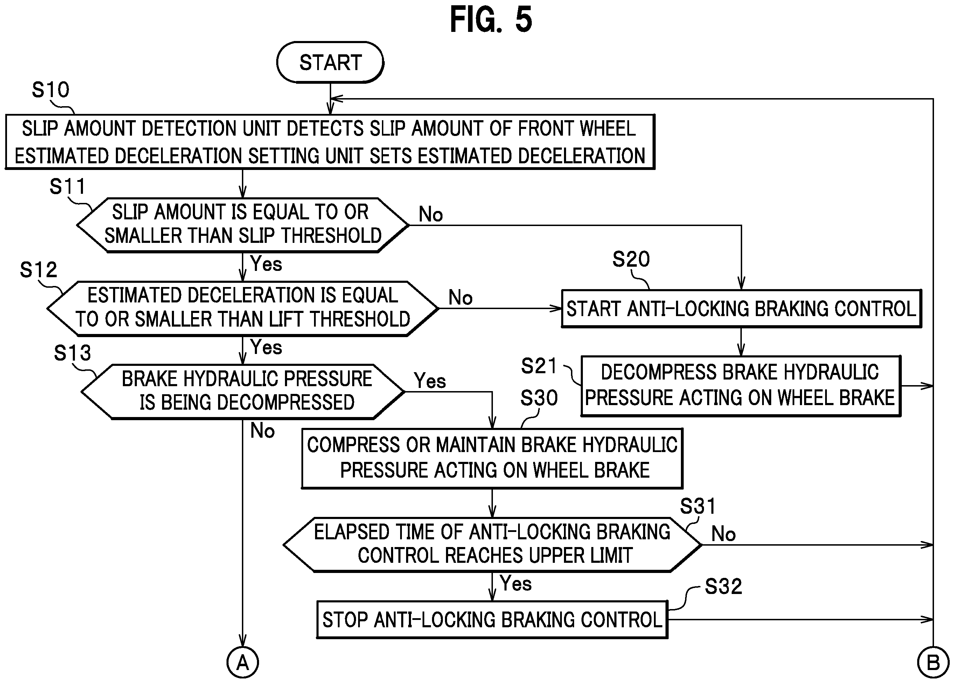

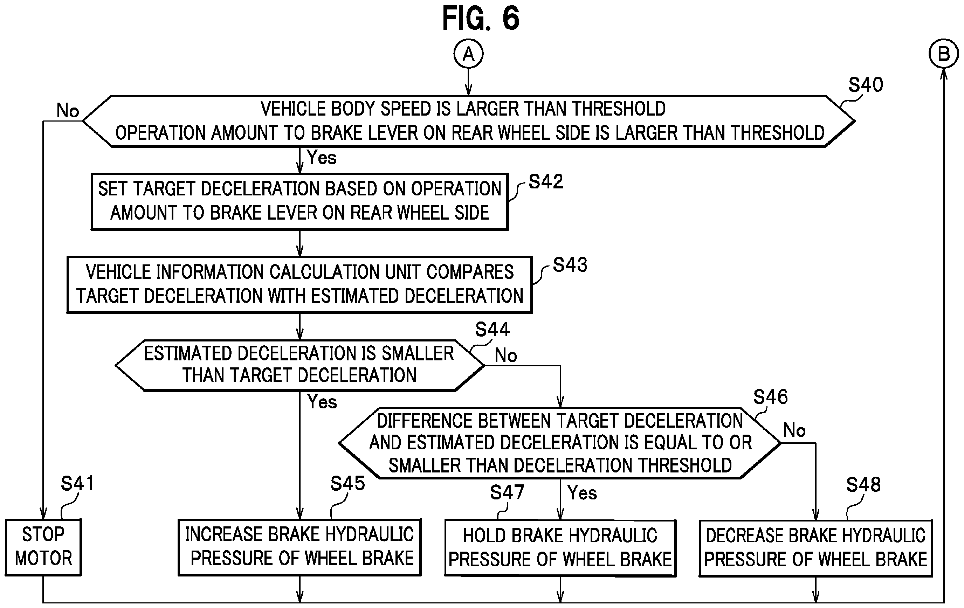

Next, the anti-locking braking control, anti-locking braking non-control, and the interlocking braking control implemented by the brake device U according to the present embodiment will be described. In the following description, flowcharts in FIGS. 5 and 6 will be referred to as appropriate.

### (Anti-Locking Braking Control)

First, when the driver operates the brake lever L1 shown in FIG. 1 on the front wheel side, the slip amount detection unit 270 shown in FIG. 2 detects the slip amount of the front wheel based on the wheel speed of the front wheel, and the estimated deceleration setting unit 230 sets the estimated deceleration (step S10).

When the slip amount is larger than the slip threshold (NO in step S11), the anti-locking braking control determination unit 255 determines that the front wheel is likely to fall into a locked state. At this time, the anti-locking braking control determination unit 255 causes the anti-locking braking control unit 250 to start the anti-locking braking control (step S20) so as to decompress the brake hydraulic pressure acting on the wheel brake F (step S21).

When the slip amount is equal to or smaller than the slip threshold (YES in step S11) and the estimated deceleration is larger than the lift threshold (NO in step S12), the anti-locking braking control determination unit 255 determines that the front wheel is likely to fall into the locked state. At this time, the anti-locking braking control determination unit 255 causes the anti-locking braking control unit 250 to start the anti-locking braking control (step S20) so as to decompress the brake hydraulic pressure acting on the wheel brake F (step S21).

When the slip amount is equal to or smaller than the slip threshold (YES in step S11) and the estimated deceleration is equal to or smaller than the lift threshold (YES in step S12), the anti-locking braking control determination unit 255 determines whether the brake hydraulic pressure is being decompressed by the anti-locking braking control unit 250 (step S13).

When the brake hydraulic pressure is being decompressed by the anti-locking braking control unit 250 (YES in step S13), the anti-locking braking control determination unit 255 causes the anti-locking braking control unit 250 to execute control for increasing the brake hydraulic pressure acting on the wheel brake F or holding this brake hydraulic pressure constant (step S30). At this time, the anti-locking braking control determination unit 255 compresses the brake hydraulic pressure acting on the wheel brake F or maintains this brake hydraulic pressure constant based on information from various sensors such as the wheel speed obtained from the wheel speed detector 32.

After the anti-locking braking control unit 250 compresses the brake hydraulic pressure acting on the wheel brake F or maintains this brake hydraulic pressure constant (step S30), it is determined whether an elapsed time from the start of the anti-locking braking control reaches an upper limit (step S31).

Then, when the elapsed time does not reach the upper limit (NO in step S31), the detection for the slip amount of the front wheel and the setting for the estimated deceleration are repeated (step S10) .

When the elapsed time from the start of the anti-locking braking control reaches the upper limit (YES in step S31), the anti-locking braking control unit 250 stops the anti-locking braking control (step S32), and the detection for the slip amount of the front wheel and the setting for the estimated deceleration are repeated (step S10).

When the electronic controller 200 shown in FIG. 1 determines that the brake hydraulic pressure acting on the wheel brake F is to be decompressed, the wheel hydraulic pressure line B is blocked from the master cylinder MC and the wheel hydraulic pressure line B is opened to the release line E on the reservoir 5 side by the control valve means V. Specifically, the inlet valve 2 is brought into the closed state and the outlet valve 3 is brought into the open state by the electronic controller 200.

In this way, the brake fluid in the wheel hydraulic pressure line B leading to the wheel brake F flows into the reservoir 5 through the release line E, and as a result, the brake hydraulic pressure acting on the wheel brake F is decompressed.

When the electronic controller 200 determines that the brake hydraulic pressure acting on the wheel brake F is to be held constant, the wheel hydraulic pressure line B and the release line E are blocked by the control valve means V. Specifically, the inlet valve 2 is brought into the closed state and the outlet valve 3 is brought into the closed state by the electronic controller 200.

In this way, the brake fluid is confined in a hydraulic pressure line closed by the wheel brake F, the inlet valve 2, and the outlet valve 3, and as a result, the brake hydraulic pressure acting on the wheel brake F is held constant.

When the electronic controller 200 determines that the brake hydraulic pressure acting on the wheel brake F is to be compressed, the wheel hydraulic pressure line B is opened and the release line E is blocked by the control valve means V. Specifically, the inlet valve 2 is brought into the open state and the outlet valve 3 is brought into the closed state by the electronic controller 200. When the motor 20 is driven by the electronic controller 200, the pump 6 is operated as the motor 20 is driven, the brake fluid stored in the reservoir 5 is returned to the wheel hydraulic pressure line B via the discharge line D, and thus the pressure of the brake fluid in the wheel hydraulic pressure line B is increased.

At this time, since a spring provided in the reservoir 5 biases a piston of the reservoir 5 to cause the piston to return to an initial position, pressures in the release line E and the suction line C are increased. At this time, the suction valve 4 is in a closed state until pressure boosting from the reservoir 5 ends (the reservoir 5 runs out of the brake fluid).

When pressure boosting control is continuously executed after the reservoir 5 runs out of the brake fluid, as shown in FIG. 4, the pump 6 is continuously operated, the pressure of the vacuum pressure chamber 4a of the suction valve 4 becomes the vacuum pressure, thus the valve body 4d is pushed up by the plunger 4c, and the suction valve 4 is brought into the open state.

When the suction valve 4 is brought into the open state, the brake fluid flowing into the vacuum pressure chamber 4a from the suction line C on the master cylinder MC side flows into the suction line C on the pump 6 side and is sucked by the pump 6.

### (Anti-Locking Braking Non-Control)

When the slip amount is equal to or smaller than the slip threshold (YES in step S11) and then the estimated deceleration is equal to or smaller than the lift threshold (YES in step S12), the anti-locking braking control determination unit 255 shown in FIG. 2 determines that there is no possibility that the front wheel is locked, and thus the anti-locking braking control is not executed.

During the anti-locking braking non-control, as shown in FIG. 1, in the first brake system K1, all of the plurality of electromagnetic coils that drive the plurality of solenoid valves are demagnetized by the electronic controller 200. That is, in normal braking control, the pressure regulator valve 1 and the inlet valve 2 are in the open state, and the outlet valve 3 and the suction valve 4 are in the closed state.

When the driver operates the brake lever L1 on the front wheel side during the anti-locking braking non-control, a brake hydraulic pressure is generated in the master cylinder MC due to an operation force. The brake hydraulic pressure is transmitted to the wheel brake F on the front wheel side via the output hydraulic pressure line A, the pressure regulator valve 1, and the wheel hydraulic pressure line B, and the front wheel is braked. When the brake lever L1 is released, the brake fluid flowing into the wheel hydraulic pressure line B is returned to the master cylinder MC via the pressure regulator valve 1 and the output hydraulic pressure line A.

In the second brake system K2, when the driver operates the brake lever L2 on the rear wheel side, the brake wire W is operated by an operation force, thus the braking force is generated in the wheel brake R on the rear wheel side, and the rear wheel is braked.

### (Interlocking Braking Control)

In a state in which the anti-locking braking control unit 250 shown in FIG. 2 does not execute the anti-locking braking control (NO in step S13), when the driver operates the brake lever L2 on the rear wheel side or operates both the front and rear brake levers L1 and L2, the vehicle information calculation unit 240 acquires the vehicle body speed and the operation amount to the brake lever L2 on the rear wheel side.

When the vehicle body speed is equal to or smaller than a predetermined threshold and the operation amount to the brake lever L2 is equal to or smaller than a predetermined threshold (NO in step S40), the interlocking braking control unit 260 stops the motor 20 (see FIG. 1) of the pump 6 (see FIG. 1) (step S41). That is, the interlocking braking control is not executed.

When the vehicle body speed is larger than the predetermined threshold and the operation amount to the brake lever L2 is larger than the predetermined threshold (YES in step S40), the target deceleration setting unit 220 sets the target deceleration based on the operation amount to the brake lever L2 on the rear wheel side (step S42). Then, the vehicle information calculation unit 240 compares the magnitude of the target deceleration with the magnitude of the estimated deceleration (step S43).

When the estimated deceleration is equal to or smaller than the target deceleration (YES in step S44), the interlocking braking control unit 260 closes the pressure regulator valve 1 of the first brake system K1 shown in FIG. 1, opens the inlet valve 2, closes the outlet valve 3 and operates the motor 20. Accordingly, when the pump 6 is operated, the pressure of the vacuum pressure chamber 4a of the suction valve 4 becomes the vacuum pressure, and the suction valve 4 is brought into the open state, so that the brake fluid in the suction line C is sucked by the pump 6. Then, the brake fluid is discharged from the pump 6 to the discharge line D, the brake fluid flows from the discharge line D into the wheel hydraulic pressure line B, and thus the brake hydraulic pressure in the wheel hydraulic pressure line B is increased (step S45).

At this time, in order to make the estimated deceleration approach the target deceleration, the interlocking braking control unit 260 adjusts the valve opening pressure of the pressure regulator valve 1 and drives, based on the difference between the target deceleration and the estimated deceleration, the motor 20 with the variable value to change the discharge amount of the pump P, and thus the brake hydraulic pressure acting on the wheel brake F on the front wheel side is adjusted according to a use condition and a specification of the vehicle.

When the estimated deceleration is larger than the target deceleration (NO in step S44), the interlocking braking control unit 260 determines whether the difference between the target deceleration and the estimated deceleration is equal to or smaller than the deceleration threshold (step S46).

Then, when the difference between the target deceleration and the estimated deceleration is equal to or smaller than the deceleration threshold (YES in step S46), the interlocking braking control unit 260 (see FIG. 2) adjusts the valve opening pressure of the pressure regulator valve 1 to the first hydraulic pressure, opens the inlet valve 2, closes the outlet valve 3, and operates the motor 20. At this time, the interlocking braking control unit 260 (see FIG. 2) drives the motor 20 with a fixed value to adjust the discharge amount of the pump 6 to the first set value. In this way, the brake hydraulic pressure acting on the wheel brake F is held so as to maintain the difference between the target deceleration and the estimated deceleration (step S47).

When the estimated deceleration is larger than the target deceleration (NO in step S44) and the difference between the target deceleration and the estimated deceleration is larger than the deceleration threshold (NO in step S46), the interlocking braking control unit 260 (see FIG. 2) adjusts the brake hydraulic pressure in the pressure regulator valve 1 to the second hydraulic pressure smaller than the first hydraulic pressure, opens the inlet valve 2, closes the outlet valve 3, and operates the motor 20. At this time, the interlocking braking control unit 260 (see FIG. 2) drives the motor 20 with the fixed value to adjust the discharge amount of the pump 6 to the second set value smaller than the first set value. In this way, the brake hydraulic pressure acting on the wheel brake F is decompressed according to the use condition and the specification of the vehicle (step S48).

In the brake device U as described above, the braking force of the wheel brake F is controlled by referring to the wheel speed in addition to the operation amount to the brake lever L2 on the rear wheel side. Therefore, even when a weight of a loaded object loaded on the vehicle varies, the vehicle can be braked in the same manner as long as the operation amount is the same.

Accordingly, in the brake device U according to the present embodiment, the vehicle is braked according to the operation amount to the brake lever L2 while being less likely to be affected by the weight of the loaded object, and therefore, operation feel for the driver can be improved.

The brake device U according to the present embodiment can be applied to a brake system including a mechanical second brake system K2.

In the brake device U according to the present embodiment, the braking force of the wheel can be controlled even without using a hydraulic pressure sensor for braking control. Since the number of components in the controller 50 (modulator) is reduced if the hydraulic pressure sensor is omitted, a manufacturing cost can be reduced, and a size and a weight can be reduced.

In the brake device U according to the present embodiment, since the target deceleration is set based on the operation amount to the brake lever L2 and the wheel speed, control executed by the electronic controller 200 can be simplified, and versatility can be enhanced.

In the brake device U according to the present embodiment, since the anti-locking braking control for preventing locking of the wheel can be executed, and the braking force of the wheel brake F is controlled by referring to the wheel speed in addition to the operation amount to the brake lever L1, the operation feel for the driver can be improved. Further, in the brake device U according to the present embodiment, the anti-locking braking control can be executed while preventing slip of the wheel and lift of the vehicle body.

The suction valve 4 of the brake device U according to the present embodiment is a mechanical valve that is opened and closed by a pressure difference, and opening and closing of the suction valve 4 is automated, and therefore, the control executed by the electronic controller 200 can be simplified, and the manufacturing cost can be reduced.

Although the embodiment of the invention is described above, the invention is not limited to the embodiment described above, and can be appropriately modified without departing from the scope of the invention.

In the brake device U according to the present embodiment, as shown in FIG. 1, the operation amount to the brake lever L2 is detected based on the tilt angle of the brake lever L2 on the rear wheel side, but the operation amount to the brake lever L2 may be detected based on an operation of another part in the second brake system K2. For example, the operation amount to the brake lever L2 can also be detected based on a tilt angle of the rod R1 of the wheel brake R on the rear wheel side.

In the brake device U according to the present embodiment, the electronic controller 200 can execute the anti-locking braking non-control, the anti-locking braking control, and the interlocking braking control, but the electronic controller 200 may be configured to execute other braking control.

For example, the electronic controller 200 may be configured to execute braking assist control for generating the braking force in the wheel brake F on the front wheel side by operating the pump 6 in a state in which the pressure regulator valve 1 is opened and causing the brake fluid to flow into the wheel hydraulic pressure line B when the brake lever L1 on the front wheel side is operated.

In the brake device U according to the present embodiment, the second brake system K2 is a mechanical brake system, but the second brake system may be a hydraulic brake system.

In the present embodiment, a case in which the brake device according to the invention is applied to the motorcycle is described as an example, but the brake device according to the invention can also be applied to a four-wheeled bar handle vehicle as long as the brake device according to the invention includes an independent brake system. In this case, wheel brakes of two front wheels are connected to one brake system, and wheel brakes of two rear wheels are connected to the other brake system. The brake lever L2 on the rear wheel side may be used as a brake pedal.

In the brake device U according to the present embodiment, the mechanical suction valve 4 is used, but the suction valve may be implemented by a solenoid valve that is opened and closed based on a command from the electronic controller 200.

### Reference Signs List

1 Pressure regulator valve
2 Inlet valve
3 Outlet valve
4 Suction valve
5 Reservoir
6 Pump
10 Hydraulic pressure line
20 Motor
31 Operation amount detector
32 Wheel speed detector
50 Controller
100 Base
200 Electronic controller
210 Storage unit
220 Target deceleration setting unit
230 Estimated deceleration setting unit
240 Vehicle information calculation unit
250 Anti-locking braking control unit
255 Anti-locking braking control determination unit
260 Interlocking braking control unit
270 Slip amount detection unit
A Output hydraulic pressure line
B Wheel hydraulic pressure line
C Suction line
D Discharge line
E Release line
F Wheel brake on front wheel side
R Wheel brake on rear wheel side
K1 First brake system
K2 Second brake system
L1 Brake lever on front wheel side
L2 Brake lever on rear wheel side
MC Master cylinder
U Brake device
V Control valve means
W Brake wire

## Claims

1. A brake device for a vehicle, comprising:
an operation amount detector configured to detect an operation amount to an operator;
a wheel speed detector configured to detect a wheel speed;
a controller configured to control a braking force of a wheel brake; and
an electronic controller, wherein
the electronic controller includes:
a target deceleration setting unit configured to set a target deceleration, which is a target value of a deceleration of the vehicle, based on the operation amount to the operator;
an estimated deceleration setting unit configured to set an estimated deceleration, which is an estimated value of the deceleration of the vehicle, based on the wheel speed detected by the wheel speed detector; and
a braking control unit configured to control the controller based on the target deceleration and the estimated deceleration.

2. The brake device for a vehicle according to claim 1, wherein deceleration data indicating correspondence relationship between the operation amount to the operator and the deceleration of the vehicle is stored in the electronic controller, and
the target deceleration setting unit sets the target deceleration based on the deceleration data.

3. The brake device for a vehicle according to claim 1 or 2, wherein
the braking control unit executes braking control for controlling a brake hydraulic pressure acting on the wheel brake based on a difference between the target deceleration and the estimated deceleration.

4. The brake device for a vehicle according to any one of claims 1 to 3, wherein
the electronic controller includes:
an anti-locking braking control unit configured to execute anti-locking braking control for preventing locking of a wheel by increasing, decreasing, or holding a brake hydraulic pressure of the wheel brake by the controller; and
an anti-locking braking control determination unit configured to determine whether the anti-locking braking control is necessary,
when the anti-locking braking control determination unit determines that the anti-locking braking control is necessary, the anti-locking braking control unit executes the anti-locking braking control, and
when the anti-locking braking control determination unit determines that the anti-locking braking control is unnecessary, the braking control unit controls the braking force of the wheel brake.

5. The brake device for a vehicle according to claim 4, wherein
the electronic controller includes:
a slip amount detection unit configured to detect a slip amount of the wheel,
in the anti-locking braking control determination unit, when the slip amount is larger than a slip threshold or when the estimated deceleration is larger than a lift threshold, the anti-locking braking control is executed.

6. The brake device for a vehicle according to any one of claims 1 to 5, further comprising:
two operators which are respectively on a front wheel side and a rear wheel side;
two wheel brakes which are respectively on the front wheel side and the rear wheel side;
a first brake system in which one of the operators and one of the wheel brakes are connected; and
a second brake system in which the other of the operators and the other of the wheel brakes are connected, wherein
the target deceleration setting unit sets the target deceleration based on an operation amount to the other operator, and
the braking control unit controls the controller provided in the first brake system based on the target deceleration and the estimated deceleration.

7. The brake device for a vehicle according to claim 6, wherein
the first brake system includes:
a hydraulic pressure line in which a brake hydraulic pressure is generated by the one operator or a pump; and
control valve means provided in the hydraulic pressure line, and
the braking control unit controls a braking force of the one wheel brake by switching opening and closing of the control valve means in conjunction with a braking force of the other wheel brake.

8. The brake device for a vehicle according to claim 7, wherein
the braking control unit increases, decreases, or holds the brake hydraulic pressure of the one wheel brake by switching the opening and closing of the control valve means.

9. The brake device for a vehicle according to claim 7, wherein
the control valve means includes:
a pressure regulator valve;
an inlet valve leading to the pressure regulator valve and to the one wheel brake; and
an outlet valve leading to the one wheel brake and to a suction side of the pump,
the brake hydraulic pressure acting on the one wheel brake from the one operator is capable of being adjusted by adjusting a valve opening pressure of the pressure regulator valve, and
when the estimated deceleration is equal to or smaller than the target deceleration, the braking control unit adjusts the valve opening pressure of the pressure regulator valve, opens the inlet valve, closes the outlet valve, operates the pump, and changes a discharge amount of the pump based on a difference between the target deceleration and the estimated deceleration.

10. The brake device for a vehicle according to claim 9, wherein
when the estimated deceleration is larger than the target deceleration and the difference between the target deceleration and the estimated deceleration is equal to or smaller than a deceleration threshold, the braking control unit adjusts the valve opening pressure of the pressure regulator valve to a first hydraulic pressure, opens the inlet valve, closes the outlet valve, operates the pump, and adjusts the discharge amount of the pump to a first set value.

11. The brake device for a vehicle according to claim 10, wherein
when the estimated deceleration is larger than the target deceleration and the difference between the target deceleration and the estimated deceleration is larger than the deceleration threshold, the braking control unit adjusts the valve opening pressure of the pressure regulator valve to a second hydraulic pressure smaller than the first hydraulic pressure, opens the inlet valve, and closes the outlet valve, operates the pump, and adjusts the discharge amount of the pump to a second set value smaller than the first set value.
